# EUROPEAN PATENT SPECIFICATION

(11) **EP 2 511 037 B1**
(45) Date of publication and mention of the grant of the patent: **28.12.2016**
(21) Application number: 12250091.1
(22) Date of filing: 05.04.2012
(51) Int. Cl.: B23K 9/18, B23K 9/32, B23K 10/02, B23K 26/70, B23K 26/14, B23K 26/34, B23K 9/04, B23K 9/16

(54) **A method of weld cladding with simultaneous deposition of weld on a side and cryogenic cooling on the opposite side ; Apparatus for performing such method**
Schweißplattierung
Gaine de soudure

(30) Priority: 13.04.2011 GB 201106238
(43) Date of publication of application: 17.10.2012
(73) Proprietor: Linde Aktiengesellschaft, 80331 München (DE)
(72) Inventor: VELDSMAN, Walter Mark, Guildford, GU4 7FA (GB)
(74) Representative: Christie, Gemma Louise

(56) References cited:
- JP-A- 62 183 985
- US-A- 4 152 568
- US-A- 4 296 300
- US-A- 4 505 945
- US-A- 5 362 937
- US-A1- 2003 127 431
- US-A1- 2004 009 042

## Description

The present invention relates to a method of weld cladding according to the preamble of claim 1 (see, as a pure example, US5 362 937 A), for increasing the corrosion resistance of weld cladding.

Weld cladding (which may alternatively be referred to as weld overlay) comprises providing a corrosion or oxidation resistant surface on a less resistant material by weld deposition. Weld cladding using corrosion resistant alloys is used to increase the corrosion resistance of normal alloys in for example highly corrosive environments such as sea water, nuclear and cooling water applications.

It has however been found that weld overlays/cladding using for example stainless steel and high Nickel alloys can result in the final weld having a high iron (Fe) content. A high iron content significantly reduces the pitting corrosion resistance of the weld cladding. Industry typically allows a maximum level of 36% dilution of iron in the weld cladding. The corrosion resistance of a weld having an amount of iron in excess of this maximum level is known to have significantly reduced resistance to pitting corrosion.

US 4 505 945 discloses a method of plasma spraying a member in which the surface of the member being treated with the plasma coating is cooled by means of a cryogenic spray applied to the surface before the plasma spray is applied.

US 5 362 937 discloses a method of weld cladding a metal plate in which the reverse side to that being treated is cooled by means of a water spray to minimise deformation.

US 4 152 568 discloses a method of forming a pipe from metal plate in which the metal plate is formed into a tube and its edges butt welded by a first weld. The opposite side to the first weld is then welded whilst the original weld is cooled by means of a water or cryogenic spray.

According to the invention there is provided a method of weld cladding comprising: providing a welding torch adjacent a first surface of a substrate; providing a coolant head adjacent a second, reverse, surface of the substrate, wherein the coolant head comprises at least one nozzle for ejecting coolant to impinge on the second surface of the substrate; and simultaneously depositing a weld on the first surface while applying a coolant to the second surface of the substrate, the weld being of a material able to be diluted by the substrate, wherein that the coolant is cryogenic carbon dioxide, see claim 1.

The substrate may be a pipe.

"Cryogenic coolant" is herein defined as a coolant having a temperature of less than -50 °C.

It has been found that the invention can minimise the mixing of the new weld metal with the metal of the substrate. The weld cladding has been found to have significantly less dilution. "Dilution" is herein defined as the amount of mixing of the melting base metal with the new weld metal. As a result the corrosion resistance of the weld cladding is significantly improved. Embodiments of the invention provide a method of managing the heat input into the material substrate and the weld metal. Embodiments of the invention therefore help to limit the potential damage the high heat input can cause. By providing coolant to the reverse side of the substrate embodiments of the invention do not disrupt the welding process of the cladding.

As a result of the corrosion resistance of the weld overlay/cladding being maximised, embodiments of the invention can extend the life of the component in harsh service environments. This can lead to increased productivity of a plant, lower manufacturing costs and lower deformation levels. Examples of harsh service environments include nuclear pipe cladding, nuclear reactor vessel nozzles, boiler tube overlays, high corrosion zone pipe cladding applications in off shore oil and gas industries and valve bodies in off shore oil and gas industries.

Preferably the coolant head is substantially axially aligned with the welding torch, for example the coolant head and welding torch may be substantially coaxial. The coolant head may be arranged to track the movement of the welding torch. It will be appreciated that the movement of the welding torch and coolant head is relative movement with respect to the substrate. Thus the substrate may move and the coolant head and welding torch may be fixed or the substrate may be fixed and the welding torch and coolant head may track across the surface.

The coolant head comprises, according to the present invention, at least one cooling nozzle for ejecting cryogenic coolant towards a surface of the substrate. The cryogenic coolant may thus impinge upon the surface of the substrate. The nozzle may be positioned approximately 10 to 50mm from the surface of the pipe.

Preferably, the cryogenic coolant is, according to the present invention, carbon dioxide, for example liquid or solid carbon dioxide.

The cryogenic coolant passes, according to the present invention, through a nozzle causing the liquid coolant to expand. The cryogenic coolant may pass through a coolant head having a plurality of nozzles. The expansion of the coolant may advantageously result in a change of state of the coolant from liquid to solid. Preferably, expansion through the nozzle transforms liquid carbon dioxide to solid snow carbon dioxide. Solid snow carbon dioxide advantageously has been found to provide the highest heat transfer characteristics due to the heat of sublimation as the snow contacts the substrate and transforms from the solid phase directly to the gas phase.

Preferably the cryogenic coolant impinges upon the surface at or ahead of the point of deposition of the weld. Preferably the cryogenic coolant impinges upon the surface between 0 and 10mm ahead of the point of deposition of the weld, for example the nozzle may be between 0 and 20 mm ahead of the welding torch.

The weld cladding has a weld deposition region proximal to the welding torch where a weld cladding is being deposited and a weld solidification region downstream of the welding torch where a deposited weld is cooling and/or solidifying. Preferably the coolant head is arranged to apply a cryogenic coolant to the opposing side of the substrate in both the weld deposition region and the weld solidification region. For example, the coolant head comprises at least one cooling nozzle for ejecting cryogenic coolant to impinge upon the surface of the substrate in the weld deposition region and at least one further cooling nozzle, downstream of the welding torch, for ejecting cryogenic coolant to impinge upon the surface of the substrate in the weld solidification region.

The coolant may be applied around the full internal circumferential surface of a substrate/ pipe. Accordingly, the coolant head may have a distributed array of nozzles shaped to substantially match the internal shape of the substrate. For example the nozzle may at least one radial nozzle

For weld cladding a pipe, the nozzle is preferably a 360° radial cooling nozzle, for example a spray ring. The spray ring may be positioned within the pipe to effect the cooling. The cooling nozzle may for example comprise a circumferentially distributed array of nozzles, for example the cooling nozzle may comprise at least 12 nozzles.

The flow rate at which the cryogenic coolant is provided is dictated by the rate at which it is desired to cool the weld in order to reduce the dilution. For example, the flow rate of the cryogenic coolant can be between 1 and 5 kg/min.

The weld cladding may comprise stainless steel or high Nickel alloys. For example, the high Nickel alloys are selected from alloy 625, alloy 825, alloy 725, alloy C276, alloy C22, alloy monel, alloy 905L, alloy 316L and alloy 304L.

Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or part of other embodiments, even if the other features and embodiments make no mention of the particular feature. This, the invention extends to such specific combinations not already described.

The invention may be performed in various ways, and by way of example only an embodiment thereof will now be described, reference being made to the accompanying drawings in which:
Figure 1 is a graph of published results showing the effect of dilution on the corrosion resistance of a weld overlay/cladding;
Figure 2 is a schematic cross-sectional view of an apparatus according to one embodiment of the invention;
Figure 3 is an image of the cooling nozzle suitable for use in an embodiment of the invention; and
Figure 4 is an image of the cooling apparatus of figure 3 in use.

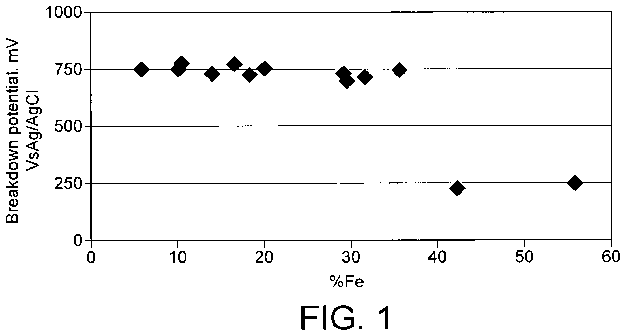

As seen in Figure 1, as the dilution of iron in the weld cladding increases the pitting corrosion resistance of the weld cladding significantly decreases. There is a significant step change in corrosion resistance after the threshold of 36% dilution of iron in the weld cladding. From figure 1 it can be seen that a weld cladding having a dilution of less than 36% iron has a breakdown potential of approximately 750 mV. This breakdown potential drops dramatically when the weld cladding has a dilution of more than 36% iron. Figure 1 shows that the breakdown potential for weld claddings having a dilution of more than 36% is approximately 250 mV, this represent a reduction of approximately 66%.

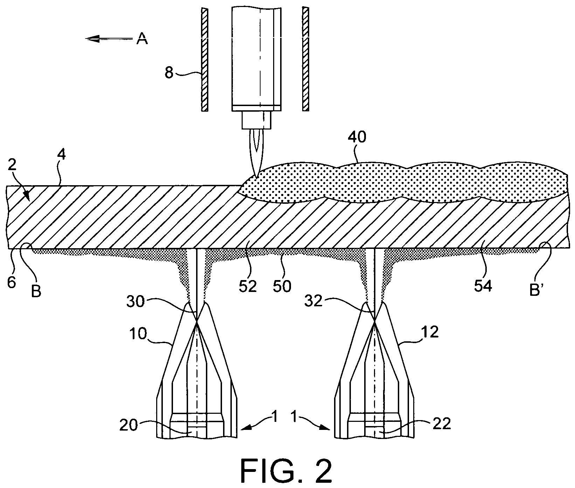

As seen in Figure 2, a weld substrate 2 (which may for example be a pipe) has a top surface 4 and a bottom surface 6. A welding torch 8 is positioned above the top surface 4 of the weld substrate 2. The welding torch 8 may for example be arranged for any one of Submerged Arc Welding(SAW), a Manual Metal Arc (MMA) welding, Gas Metal Arc Welding (GMAW), Flux Cored Arc Welding (FCAW), Gas Tungsten Arc welding (GTAW), Plasma Arc Welding (PAW) and laser welding. The skilled person will appreciate that the particular welding process chosen will depend upon the particular weld cladding application being performed.

A coolant head 1 is provided at the reverse side of the substrate. The coolant head 1 comprises a first cooling nozzle 10 and a second cooling nozzle 12 each positioned below and directed towards the bottom surface 6 of the weld substrate 2. The coolant head 1 is generally axially aligned with the welding torch 6. The first cooling nozzle 10 is positioned slightly ahead of the weld deposition head, for example the nozzle may be approximately 10mm ahead of the welding torch 8. The second cooling nozzle 12 is downstream of the first nozzle 10 and of the welding torch 8. At any period of time during the welding operation, the region of the weld substrate 2 which is impinged upon by the coolant may be arranged to be between 10 mm in front of and coaxial with the welding torch 8.

The first and second cooling nozzles 10, 12 comprise inlets 20, 22 for delivering coolant, which in the preferred embodiment is provided as liquid carbon dioxide, under pressure to the bottom surface 6 of the weld substrate 2. The inlets 20,22 may be connected to a single supply of coolant (for example the inlets may be in series or parallel fluid communication). The coolant is delivered under pressure, typically in the range of 15 to 45 bar. The nozzles 10, 12 provide outlets 30, 32 arranged to eject coolant towards the bottom surface 6 of the weld substrate 2. The stand-off distance of the nozzles 10" 12 from the bottom surface 6 of the weld substrate 2 is typically in the order of 10 mm to 50 mm. The nozzle outlet 30, 32 typically have a relatively small internal radius, for example the nozzle outlet 30 may have an outlet diameter of less than 2mm. The nozzle outlet may have a outlet diameter of between 0.5mm and 2mm, for example 1.2 mm.

As known in the art, in use, the welding torch 8 deposits the weld cladding 40 on the top surface 4 of the weld substrate 2 at a deposition point in a weld deposition region 52. The welding torch 8 is moved relative to the substrate 2 (from right to left as shown by the arrow A in Figure 2). As the welding torch 8 moves along the substrate the deposited weld cladding 40 solidifies and cools in a weld solidification region 54.

In accordance with the invention a coolant head 1 is positioned below the substrate 2 on the reverse side with respect to the welding torch 8. The coolant head 1 tracks the movement of the welding torch 8 so as to maintain the alignment of the nozzles 10, 12 with respect to the relative position of the welding torch 8 and substrate 2. Simultaneously with respect to the weld deposition, liquid carbon dioxide is pumped into the coolant head 1 through inlets 20, 22. The liquid carbon dioxide is pumped out of the nozzles 10, 12 under high pressure. The first cooling nozzle 10 cools the part of the weld substrate 2 which is directly ahead (or upstream) of the welding torch 8 in order to affect maximum cooling efficiency in order to minimise weld dilution. The second cooling nozzle 12 generally cools the part of the weld substrate 2 which is directly behind (i.e. downstream of) the welding torch 8, where the weld is solidifying. It will be noted that the coolant impinges upon the substrate 2 and spreads along the longitudinal surface of the substrate 2 such that cryogenic coolant is spread across the bottom surface 6 from a point B ahead of the welding torch 8 to a point B' which is behind the welding torch 8. Thus coolant is distributed by the coolant head 1 to the substrate 2 ahead of the weld region 52, in the weld region 52 and in the solidification region 54.

The liquid carbon dioxide turns into solid carbon dioxide snow 50, having a temperature of approximately -70 °C as it expands under pressure through the outlets 30, 32 of the nozzles 10, 12. The carbon dioxide snow 50 sublimes immediately on contact with the bottom surface 6 of the weld substrate 2. The flow rate of the carbon dioxide is dictated by the rate at which it is desired to cool the weld in order to reduce dilution. Typically, the mass flow rate of coolant may, for example, be up to 20 kg/min. The mass flow rate may be between 1 and 5 kg/min.

The rapid cooling of the bottom surface 6 of the weld substrate 2 helps to manage the heat input into the substrate 2. This helps to limit the potential damage of the high heat input, and advantageously minimises weld dilution.

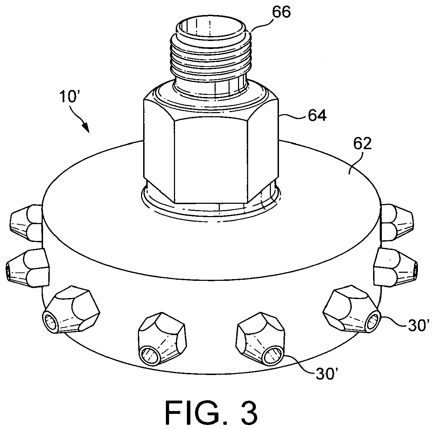

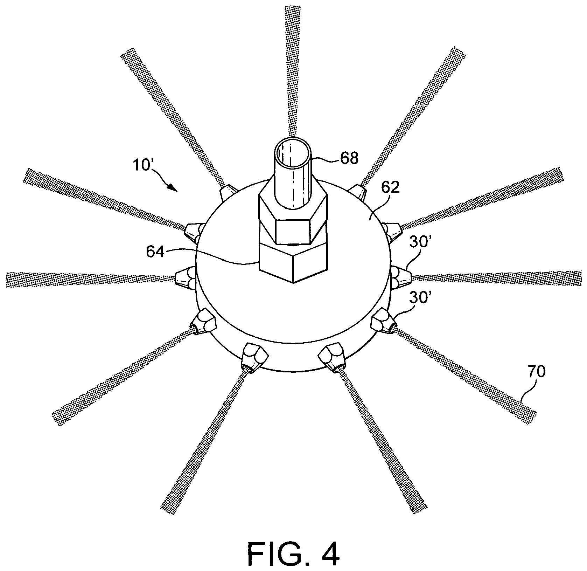

Figures 3 and 4 show a cooling nozzle 10' which is particularly suitable for use in a coolant head 1 according to embodiments of the invention in which the substrate 2 is a pipe. The nozzle 10' suitable for use in an embodiment of the invention can comprise a body portion 62 having twelve radially extending nozzle outlets 30'. The nozzles outlets 30' are evenly distributed about the circumference of the body 62. The cooling nozzle 10' comprises an inlet 64 which has a threaded connector 66 for receiving a pipe to provide a source of cryogenic coolant (not shown).

As seen in figure 4, in use the inlet 64 of the cooling nozzle 10' is connected to a pipe 68 supplying liquid carbon dioxide. The liquid carbon dioxide is pumped out of the twelve radially extending nozzles outlets 30' under high pressure. Due to the even distribution of the nozzles outets 30' around the entire circumference of the body 62 the cooling nozzle 10' ensures that coolant is delivered simultaneously and evenly to the entire internal circumferential surface of the weld 3. As the liquid carbon dioxide expands under pressure through the nozzle outlets 30' it transforms into solid carbon dioxide snow 70.

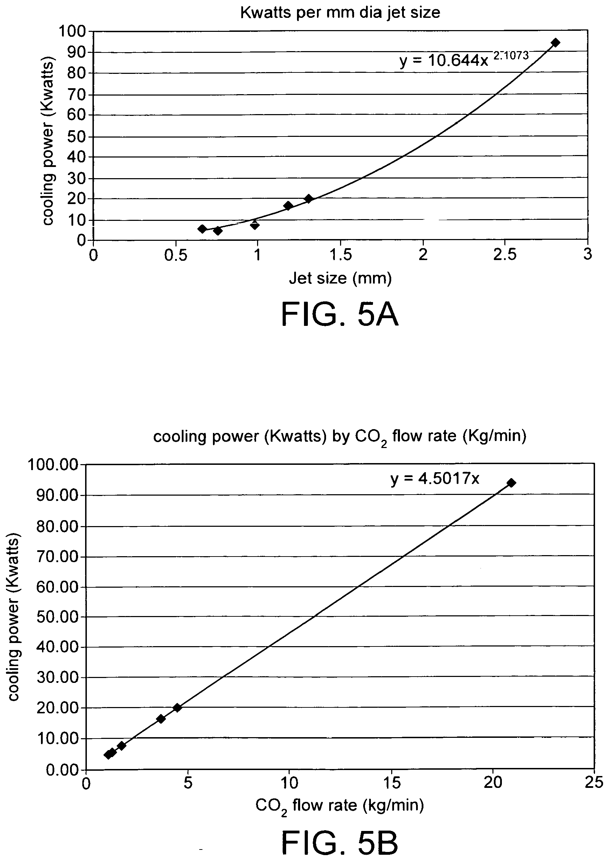

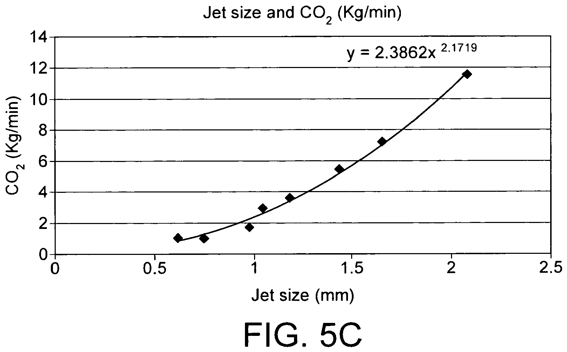

Experiments were carried out to validate the suitability of a selection of jet nozzle outlets for use in embodiments of the invention. The jet nozzles were commercially available jet nozzles available from Amal (RTM). Figures 5A and 5B show the cooling effect of carbon dioxide cryogenic coolant in Kilowatts for differing jet sizes (Figure 5A) and at different flow rates (Figure 5B). The relationship between cooling power and jet size was found to be non linear while the relationship between the cooling power and flow rate was linear. Figure 5C shows the relationship between the flow rate of coolant through different sized jet nozzles at a constant pressure. It will be noted that the relationship between the flow rate and nozzle size was found to be nonlinear.

According to the present invention, carbon dioxide has been found to have the highest heat transfer characteristics due to the immediate sublimation of the carbon dioxide snow upon contact with the hot weld surface. In contrast, other coolants may vaporise without contacting the weld surface.

## Claims

1. A method of weld cladding comprising:
a) providing a welding torch (8) adjacent a top surface (4) of a substrate (2);
b) providing a coolant head (1) adjacent a bottom reverse, surface (6) of the substrate (2), wherein the coolant head (1) comprises at least one nozzle (10) for ejecting coolant (50) to impinge upon the bottom surface (6) of the substrate (2); and
c) simultaneously depositing a weld (40) on the top surface (4) while applying a coolant (50) to the bottom surface (6) of the substrate (2);
the weld (40) being of a material able to be diluted by the substrate (2), **characterised in that** the coolant (50) is cryogenic carbon dioxide.

2. A method as claimed in claim 1, in which the coolant head (1) is substantially axially aligned with the welding torch (8) and is arranged to track the movement of the welding torch (8).

3. A method according to claim 1 or 2, in which the cryogenic coolant (50) impinges upon the bottom surface (6) at or ahead of the point of deposition (52) of the weld (40).

4. A method according to claim 3, in which the cryogenic coolant (50) impinges upon the bottom surface (6) between 0 and 20 mm ahead of the point of deposition (52) of the weld (40).

5. A method according to any preceding claim, in which the coolant head (1) is arranged to apply a cryogenic coolant (50) to the bottom surface (6) of the substrate (2) in both a weld deposition region (52) and a weld solidification region (54).

6. A method according to claim 5, in which the coolant head (1) comprises at least one cooling nozzle (10) for ejecting cryogenic coolant (50) to impinge upon the bottom surface (6) of the substrate (2) in the weld deposition region (52) and at least one further cooling nozzle (12) for ejecting cryogenic coolant (50) to impinge upon the bottom surface (6) of the substrate (2) in the weld solidification region (54).

7. A method as claimed in any preceding claim, in which the cryogenic coolant (50) is solid carbon dioxide.

8. A method as claimed in any preceding claims, in which the weld cladding (40) comprises stainless steel or high nickel alloy.

9. A method as claimed in claim 8, in which the high nickel alloy is selected from alloy 625, alloy 825, alloy 725, alloy C276, alloy C22, alloy monel, alloy 905L, alloy 316L and alloy 304L.

10. A method according to any preceding claim, wherein the substrate (2) is a pipe, the welding torch (8) is provided adjacent an outer surface of the pipe; and the coolant head (1) is provided adjacent an inner surface of the pipe.

11. A method as claimed in any preceding claim, in which the coolant head (1) comprises at least one radial nozzle (30').

## Patentansprüche

1. Verfahren zur Schweißplattierung, umfassend:
a) Bereitstellen eines Schweißbrenners (8) benachbart einer oberen Oberfläche (4) eines Substrats (2) ;
b) Bereitstellen eines Kühlkopfes (1) benachbart einer unteren Rückfläche (6) des Substrats (2), wobei der Kühlkopf (1) mindestens eine Düse (10) zum Ausgeben von Kühlmittel (50) zum Auftreffen auf eine untere Oberfläche (6) des Substrats (2) umfasst; und
c) gleichzeitig, Aufbringen einer Schweißnaht (40) auf die obere Oberfläche (4) und Auftragen eines Kühlmittels (50) auf die untere Oberfläche (6) des Substrats (2);
wobei die Schweißnaht (40) aus einem Material hergestellt ist, das durch das Substrat (2) verdünnt werden kann, **dadurch gekennzeichnet, dass** das Kühlmittel (50) ein kryogenes Kohlendioxid ist.

2. Verfahren nach Anspruch 1, wobei der Kühlmittelkopf (1) im Wesentlichen axial mit dem Schweißbrenner (8) ausgerichtet ist und zum Verfolgen der Bewegung des Schweißbrenners (8) angeordnet ist.

3. Verfahren nach Anspruch 1 oder 2, wobei das kryogene Kühlmittel (50) auf die untere Oberfläche (6) an oder vor der Aufbringungsstelle (52) der Schweißnaht (40) auftrifft.

4. Verfahren nach Anspruch 3, wobei das kryogene Kühlmittel (50) auf die untere Oberfläche (6) zwischen 0 und 20 mm vor der Aufbringungsstelle (52) der Schweißnaht (40) auftrifft.

5. Verfahren nach einem der vorhergehenden Ansprüche, wobei der Kühlmittelkopf (1) angeordnet ist, um ein kryogenes Kühlmittel (50) auf die untere Oberfläche (6) des Substrats (2) sowohl im Schweißnaht-Aufbringungsbereich (52) als auch Schweißnaht-Verfestigungsbereich (54) aufzutragen.

6. Verfahren nach Anspruch 5, wobei der Kühlmittelkopf (1) mindestens eine Kühldüse (10) zum Ausgeben von kryogenem Kühlmittel (50) zum Auftreffen auf die untere Oberfläche (6) des Substrats (2) in dem Schweißnaht-Aufbringungsbereich (52) und mindestens eine weitere Kühldüse (12) zum Ausgeben von kryogenem Kühlmittel (50) zum Auftreffen auf die untere Oberfläche (6) des Substrats (2) im Schweißnaht-Verfestigungsbereich (54) umfasst.

7. Verfahren nach einem der vorhergehenden Ansprüche, wobei das kryogene Kühlmittel (50) festes Kohlendioxid ist.

8. Verfahren nach einem der vorhergehenden Ansprüche, wobei die Schweißplattierung (40) Edelstahl oder eine Legierung mit hohem Nickelgehalt umfasst.

9. Verfahren nach Anspruch 8, wobei die Legierung mit hohem Nickelgehalt ausgewählt ist aus Legierung 625, Legierung 825, Legierung 725, Legierung C276, Legierung C22, Legierung Monel, Legierung 905L, Legierung 316L und Legierung 304L.

10. Verfahren nach einem der vorhergehenden Ansprüche, wobei das Substrat (2) ein Rohr ist, wobei der Schweißbrenner (8) benachbart einer äußeren Oberfläche des Rohrs bereitgestellt wird; und wobei der Kühlmittelkopf (1) benachbart einer inneren Oberfläche des Rohrs bereitgestellt wird.

11. Verfahren nach einem der vorhergehenden Ansprüche, wobei der Kühlmittelkopf (1) mindestens eine radiale Düse (30') umfasst.

## Revendications

1. Procédé de placage de soudure comprenant :
a) la disposition d'un chalumeau de soudage (8) à proximité d'une surface supérieure (4) d'un substrat (2) ;
b) la disposition d'une tête de fluide de refroidissement (1) à proximité d'une surface inférieure opposée (6) du substrat (2), la tête de fluide de refroidissement (1) comprenant au moins une buse (10) pour l'éjection de fluide de refroidissement (50) pour qu'il vienne heurter la surface inférieure (6) du substrat (2) ; et
c) simultanément le dépôt d'une soudure (40) sur la surface supérieure (4) pendant l'application d'un fluide de refroidissement (50) à la surface inférieure (6) du substrat (2) ;
la soudure (40) étant constituée d'un matériau pouvant être dilué par le substrat (2),
**caractérisé en ce que** le fluide de refroidissement (50) est du dioxyde de carbone cryogénique.

2. Procédé selon la revendication 1, dans lequel la tête de fluide de refroidissement (1) est alignée pratiquement axialement avec le chalumeau de soudage (8) et est conçue pour suivre le déplacement du chalumeau de soudage (8).

3. Procédé selon la revendication 1 ou 2, dans lequel le fluide de refroidissement cryogénique (50) vient heurter la surface inférieure (6) au niveau du point de dépôt (52) de la soudure (40) ou en avant de celui-ci.

4. Procédé selon la revendication 3, dans lequel le fluide de refroidissement cryogénique (50) vient heurter la surface inférieure (6) entre 0 et 20 mm en avant du point de dépôt (52) de la soudure (40).

5. Procédé selon une quelconque revendication précédente, dans lequel la tête de fluide de refroidissement (1) est conçue pour appliquer un fluide de refroidissement cryogénique (50) à la surface inférieure (6) du substrat (2) à la fois dans une zone de dépôt de soudure (52) et dans une zone de solidification de soudure (54).

6. Procédé selon la revendication 5, dans lequel la tête de fluide de refroidissement (1) comprend au moins une buse de refroidissement (10) pour l'éjection de fluide de refroidissement cryogénique (50) pour qu'il vient heurter la surface inférieure (6) du substrat (2) dans la zone de dépôt de soudure (52) et au moins une autre buse de refroidissement (12) pour l'éjection de fluide de refroidissement cryogénique (50) pour qu'il vient heurter la surface inférieure (6) du substrat (2) dans la zone de solidification de soudure (54).

7. Procédé selon une quelconque revendication précédente, dans lequel le fluide de refroidissement cryogénique (50) est du dioxyde de carbone solide.

8. Procédé selon une quelconque revendication précédente, dans lequel le placage de soudure (40) comprend de l'acier inoxydable ou de l'alliage à haute teneur en nickel.

9. Procédé selon la revendication 8, dans lequel l'alliage à haute teneur en nickel est choisi parmi l'alliage 625, l'alliage 825, l'alliage 725, l'alliage C276, l'alliage C22, l'alliage monel, l'alliage 905L, l'alliage 316L et l'alliage 304L.

10. Procédé selon une quelconque revendication précédente, dans lequel le substrat (2) est un tuyau, le chalumeau de soudage (8) est disposé à proximité d'une surface externe du tuyau ; et la tête de fluide de refroidissement (1) est disposée à proximité d'une surface interne du tuyau.

11. Procédé selon une quelconque revendication précédente, dans lequel la tête de fluide de refroidissement (1) comprend au moins une buse radiale (30').
